# EUROPEAN PATENT APPLICATION

(11) **EP 0 632 368 A1**
(43) Date of publication of application: **04.01.1995**
(21) Application number: 94201696.5
(22) Date of filing: 14.06.1994
(51) Int. Cl.: G06F 3/16, H04H 1/00

(54) **A radio card to be associated with a computer**

(30) Priority: 01.07.1993 IT MI931422
(71) Applicant: C & A CONSULENTI & ASSOCIATI s.a.s., I-10138 Turin (IT)
(72) Inventor: Miglino, Enrico, I-10134 Turin (IT)
(74) Representative: Robba, Eugenio

(57) **Abstract**

A. A radio card capable of being associated with a computer and comprising a PLL device and a digital control apparatus, both being directly driven by said computer. It further comprises an FM tuner controlled by the PLL, at the output of which there are provided an RDS recording device and a decoder of the stereo/mono signal, which latter in turn is connected to said digital control apparatus. This latter is connected to an amplifier comprising two stereo channels.

## Description

The present invention concerns a radio card which is capable of being associated with a computer.

Computers are presently used in several fields where they accomplish various calculation and control functions in systems and processes. Further to being employed as calculating means, computers are being integrated into telecommunication technologies, thus becoming capable of placing telephone calls, transmitting data or telefaxsimile, receiving radio and television signals, linking themselves with multimedial and interactive data bases anywhere in the world.

Several so called interactive "personal media" have become widely spread, such as home videophone, radio receivers incorporated in a personal computer, interactive compact discs, and others from which new technical solution and therefore new products are generated.

The main object of the present invention, is to allow the direct control of the tuning and decoding operations concerning standard RDS (Radio Data system) signals and the direct control of the audio functions in a personal computer, contrarily to what takes place in the known devices.

In order to accomplish the above object, the present invention consists of a radio card capable of being associated with a computer, characterized in that it comprises a PLL device and a digital control apparatus, both being directly driven by said computer, an FM tuner controlled by said PLL, at the output of said tuner there being provided an RDS recording device and a decoder of the stereo/mono signal, said decoder being connected to said digital control apparatus which in turn is further connected to an amplifier comprising two stereo channels.

The construction and the functions, as well as the advantages of a radio card in accordance with the present invention will be better understood from the following detailed exemplary but not-limiting description, with reference to the accompanying drawings in which:
Figure 1 is a block diagram of a first embodiment of a radio card capable of being associated with a computer;
Figure 2 is a block diagram of a second embodiment of a radio card according to the present invention.

The access to the various functions of the card is accomplished by means of memory addresses through which the Input/Output functions can be programmed with a suitable communication protocol.

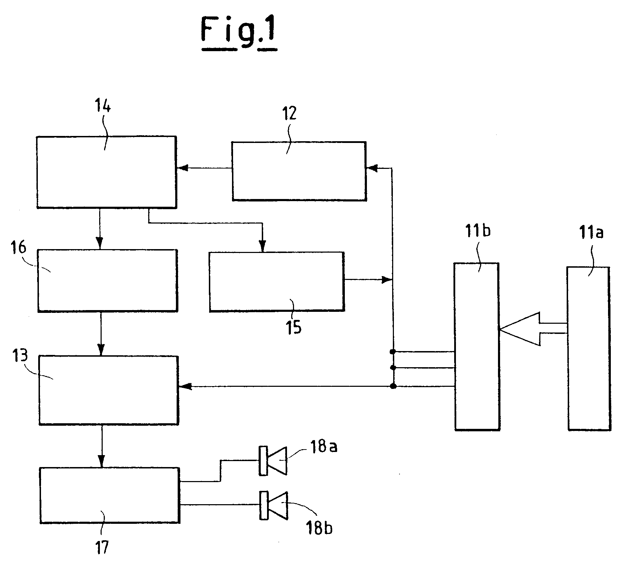

With reference to Figure 1, there is schematically illustrated a first embodiment of the present invention. The illustrated embodiment consists of an internal radio card, i.e. located inside the computer, and connected to a bus 11a through a corresponding decoder bus 11b.

This way it is possible to directly drive, i.e. by software, both a PLL (Phase Locked Loop) device indicated by reference 12, and the channel modifications through a digital control apparatus 13.

The PLL device 12 is connected to a tuner 14 provided with decoding capabilities and therefore allowing the listening to the usual FM bands and the acquisition of information transmitted in accordance with the RDS specifications. In this respect a block 15 is provided which allows the computer to record and process the RDS information that are broadcast in form of data from any peripheral communication unit.

The information that are decoded from the RDS broadcasts are in binary format, and the protocol of the card according to the present invention allows for processing the data as files that can be stored in mass storages, displayed and printed.

The tuner 14 can further carry out an automatic tuning (search) and automatically recognize the quality of the received FM signal. A block 16 connected to the tuner 14 is a decoder detecting whether the received signal is a stereo signal or a mono signal, and supplies the corresponding recognition information to the digital control apparatus 13. This latter is further connected to an amplifier 17 provided with two stereo channels 18a and 18b.

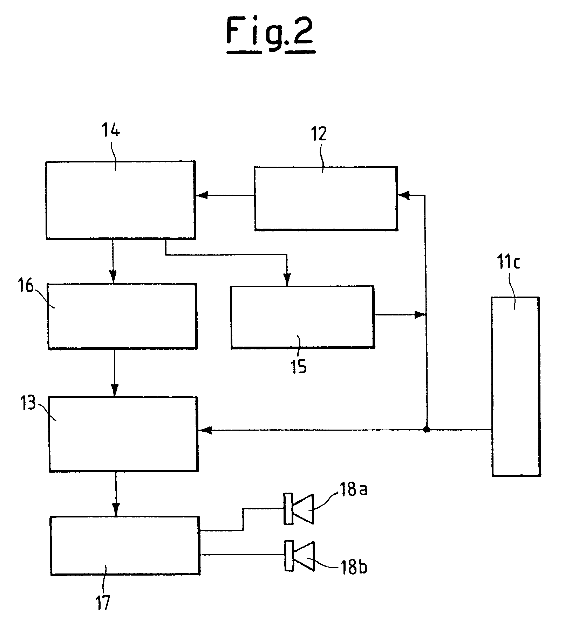

Figure 2 illustrates a second embodiment of the present invention which is an external radio card connected to a parallel port or to a serial port, schematically represented by 11c, of a computer. As clearly shown in the Figure, such external card provides the same features and construction of the internal card, only differing in respect of the connection mode.

Both embodiments of the radio card in accordance with the present invention are equipped with a software capable of managing all the controls provided for by the hardware, both in Windows and MS DOS environments. Additionally the control and the managing of the card and of the functions thereof are fully automatic.

A relevant advantage of the present invention consists in the capability of using and driving, directly by the bus or by the ports, the RDS transmission which allows for a highly reliable reception of the information, and the multi-tone automatic tuning that ensure the proper working of the device also on mobile apparatuses, such as the portable personal computers.

Another relevant advantage of the card is the possibility of deciding to store the RDS signal and to use it as an information associated with the audio track, or as a printable document.

It is evident that by means of the radio card of the present invention it is possible to realize low cost networks for distributing technical and business information. This way the users will be able to receive from radio broadcasting stations complex information, advertising and commercial material, as well as pictures, documents, etc.

## Claims

1. A radio card capable of being associated with a computer, characterized in that it comprises a PLL device (12) and a digital control apparatus (13), both being directly driven by said computer, an FM tuner (14) controlled by said PLL device (12), at the output of said tuner (14) there being provided an RDS recording device (15) and a decoder (16) of the stereo/mono signal, said decoder (16) being connected to said digital control apparatus (13) which in turn is further connected to an amplifier (17) comprising two stereo channels (18a, 18b).

2. A radio card as claimed in claim 1, characterized in that said card is an internal radio card driven by a bus (11a) of said computer through an associated decoder bus (11b).

3. A radio card as claimed in claim 1, characterized in that said card is an external radio card driven by said computer through a parallel port thereof.

4. A radio card as claimed in claim 1, characterized in that said card is an internal radio card driven by said computer through a serial port (11c) thereof.

5. A radio card as claimed in claim 1, characterized in that the drive signals of said computer are decoded and protected by a decoder bus (11b).

6. A radio card as claimed in claim 1, characterized in that said computer can record said transmitted RDS data in the form of data coming from any peripheral communication unit, through said RDS recording device.

7. A radio card as claimed in claim 1, characterized in that it incorporates a protocol for processing said RDS data as files and storing them into mass storages.

8. A radio card as claimed in claim 7, characterized in that said storable files can be displayed.

9. A radio card as claimed in claim 7, characterized in that said storable files can be printed.

10. A radio card as claimed in claim 1, characterized in that said radio card can be driven by means of memory addresses.

11. A radio card as claimed in claim 1, characterized in that said radio card can be software-controlled in Windows environment.

12. A radio card as claimed in claim 1, characterized in that said radio card can be software-controlled in MS DOS environment.
